(19) **Europäisches Patentamt**

**European Patent Office**

**Office européen des brevets**

(11) Publication number: **0 283 131 B1**

(12) # EUROPEAN PATENT SPECIFICATION

(45) Date of publication of patent specification:
14.08.91 Bulletin 91/33

(51) Int. Cl.⁵: **B41J 15/06, B65H 18/10**

(21) Application number: **88301288.2**

(22) Date of filing: **17.02.88**

(54) Paper tape control unit.

(30) Priority: **19.03.87 US 28191**

(43) Date of publication of application:
**21.09.88 Bulletin 88/38**

(45) Publication of the grant of the patent:
**14.08.91 Bulletin 91/33**

(84) Designated Contracting States:
**BE CH DE ES FR GB IT LI NL SE**

(56) References cited:
**US-A- 1 762 749**
**US-A- 1 825 783**
**US-A- 3 652 027**
**US-A- 4 116 468**
**US-A- 4 469 287**
**US-A- 4 655 409**

(73) Proprietor: **Lapadakis, Theodore P.**
**9827 Mason Avenue**
**Chatsworth California 91311 (US)**

(72) Inventor: **Lapadakis, Theodore P.**
**9827 Mason Avenue**
**Chatsworth California 91311 (US)**

(74) Representative: **Enskat, Michael Antony Frank et al**
**Saunders & Dolleymore 9, Rickmansworth Road**
**Watford Hertfordshire WD1 7HE (GB)**

Jouve, 18, rue Saint-Denis, 75001 PARIS

## Description

This invention relates generally to improved apparatus for handling elongated paper roll tape of the type used with adding machines, calculators, and the like. More particularly, this invention relates to an improved yet relatively simple paper tape control unit for supplying paper tape to and for simultaneously rewinding paper tape discharged from an adding machine or calculator or the like.

Adding machines and calculators and other types of business machines are well-known of the type utilizing elongated strips of so-called paper tape. Typically, an elongated strip of paper tape is supplied in roll form and mounted on the adding machine or calculator, etc., by means of a rotatable spindle which permits the tape to be unrolled for supply to the business machine. The business machine commonly includes a roller platen unit or a similar mechanism for drawing the tape incrementally from the supply reel into association with a suitable printing head which applies numbers, letters, etc., onto the paper tape. In most cases, the paper tape is permitted to discharge from the machine freely in an unrestrained manner which commonly results in elongated, tangled strips of paper tape which fall onto the floor in an unsightly manner.

A wide variety of paper tape control devices have been proposed for use with adding machines and calculators and the like, particularly to include a take-up reel onto which used paper tape is rewound simultaneously with unwinding of the tape from the supply reel. Many such paper tape control devices are integrated directly into the associated business machine, thereby providing a relatively large and complicated business machine construction, while other paper tape control devices have been designed as add-on components for association with a separate business machine. In general, however, these add-on components have also been relatively complex in construction and operation to include, for example, separate and relatively costly drive motors for winding the tape take-up reel. See, for example, U.S. Patent Nos. 3,338,531 and 3,447,657. Other relatively simplified add-on control devices have attempted to drivingly interlink tape supply and take-up reels, for example, by use of friction roll-drive therebetween, but such devices have not adequately accounted for the inversely varying reel diameters as tape movement progresses, thereby frequently resulting in undesired or uncontrolled tape slack. Moreover, these devices have not facilitated rapid and simple review of used tape, nor have such devices provided a simple means for applying handwritten notes or edits to the used tape.

There exists, therefore, a significant need for an improved paper tape control device, particularly in the form of an add-on kit for use with existing calculators, adding machines and other business machines, wherein the control unit provides accurate, relatively slack-free paper tape motion control while permitting review of used tape and further accommodating the application of handwritten notes or edits to the used tape. The present invention fulfills all of these needs and provides further related advantages.

US Patent No 1762749 discloses a paper feeding mechanism for a business machine. The mechanism includes a feed roller, a take-up roller and a print roller. A roll of paper is drawn off the feed roller wound around the print roller and secured to the take-up roller. A drive motor is coupled to both the feed roller and the take-up roller through a respective electromagnetic clutch to drive the rollers in opposite directions.

The clutches may be selectively energized so that the motor will only drive one of the two rollers — the other roller being allowed to rotate freely.

According to the present invention there is provided a paper tape control unit for use with a business machine having means for drawing and using an elongate strip of paper tape, said control unit comprising a control unit housing, a supply reel for carrying a roll of paper tape in elongate strip form supply to the business machine, a take-up reel for rewinding the paper tape from said supply reel, means for supporting said supply and take-up reels for rotation within said housing, to supply and draw paper tape to and from the drawing means of said business machine, said supply reel rotating as said paper tape is drawn from said supply means by said drawing means, and said take-up reel being positioned for rewinding thereonto of said paper tape used by said business machine and drive means coupled between said supply and take-up reels such that rotational driving of said supply reel can correspondingly rotatably rive said take-up reel for rewinding of said paper tape thereonto characterised by a lock assembly on said housing for releasably locking said supply reel against rotation, said drive means having sufficient slippage to permit manual rotation of said take-up reel when said supply reel is locked against rotation to permit withdrawal and review of a portion of said paper tape rewound onto said take-up reel and subsequent manual rewinding of said paper tape portion onto said take-up reel.

A paper tape control unit embodying the invention will now be described by way of example with reference to the accompanying diagrammatic drawings in which :

Figure 1 is a perspective view illustrating a paper tape control unit embodying the novel features of the invention and shown for use in combination with a business machine such as a calculator, adding machine or the like ;

Figure 2 is an enlarged left side elevation view illustrating the paper tape control unit and associated business machine ;

Figure 3 is a transverse vertical sectional view taken generally on the line 3-3 of Fig. 2 ;

Figure 4 is a vertical sectional view taken generally on the line 4-4 of Fig. 3 ;

Figure 5 is an enlarged fragmented vertical sectional view generally corresponding with the encircled region 5 of Fig. 3 ;

Figure 6 is an enlarged exploded perspective view illustrating further contruction details of the components as shown in vertical section in Fig. 5;

Figure 7 is an exploded perspective view illustrating assembly and further construction details of the paper tape control unit ; and

Figure 8 is a fragmented sectional view taken generally on the line 8-8 of Fig. 2.

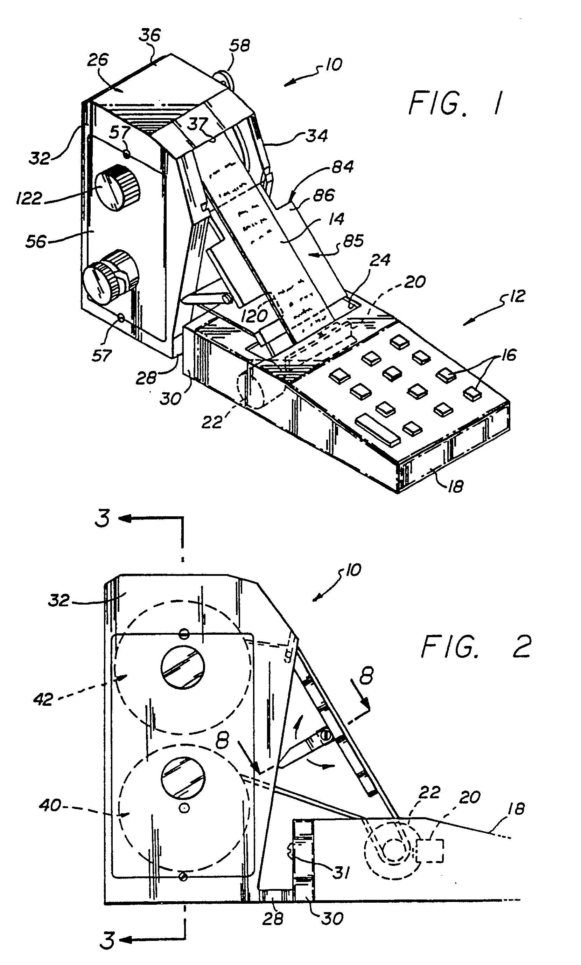

As shown in the exemplary drawings, an improved paper tape control unit referred to generally in FIGURE 1 by the reference numeral 10 is provided for use in combination with a business machine 12 such as an adding machine, calculator or the like. The improved paper tape control unit 10 provides means for close, relatively simple, control of an elongated strip of paper tape 14, or the like, including means for controlled supply and controlled take-up of the paper tape 14 relative to the business machine 12.

The improved paper tape control unit 10 of the present invention provides a relatively simple yet versatile apparatus for enhanced handling of paper tape 14 in roll form with respect to calculators, adding machines and other business machines of the type requiring paper tape in elongated strip or roll form. The control unit 10 advantageously handles the paper tape 14 as it is supplied to and discharged from the machine 12 during normal operation all in a substantially slack-free manner and without significant risk of tape breakage. The control unit 10 rewinds paper tape in an efficient manner to prevent creation of unsightly tangled masses of used tape and further to permit reuse of the paper tape by printing, for example, on the reverse side thereof. Moreover, the improved control unit 10 beneficially enhances the functional versatility of the business machine 12 by facilitating the application of handwritten edits or notations onto used paper tape, and further by permitting a relatively easy review of used paper tape.

As shown generally in FIGS. 1 and 2, the paper tape control unit 10 is designed to handle paper tape supply and discharge with respect to an adjacent business machine 12 of the type utilizing elongated strips or rolls of paper tape, such as the illustrative calculator. Business machines 12 of this general type traditionally include a plurality of operating keys or buttons 16 mounted in exposed positions on a machine housing 18 for appropriately actuating a printing head 20 located within the machine housing. This printing head 20 is positioned for printing appropriate symbols such as numbers or letters onto one side of the paper tape 14 as the tape is drawn into and through the machine 12, for example, by a traditional roller platen unit 22 or similar paper tape advancement means. In most business machines of this general type, the machine housing 18 further includes an appropriate mounting position for rotational mounting of a paper tape supply roll from which the paper tape is drawn by the roller unit 22. Used paper tape is usually discharged from the machine housing 18 through an upwardly open slot 24 for uncontrolled discharge from the machine. The traditional means on the machine housing 18 for rotationally supporting the paper tape supply roll is removed to accommodate use of the machine 12 in combination with the paper tape control unit 10 of the present invention.

In general, the improved paper tape control unit 10 comprises a relatively compact housing 26 designed to stand behind the associated business machine 12, as viewed in FIGS. 1 and 2. In this regard, in the illustrative embodiment of the invention the control unit housing 26 includes a base 28 having a relatively short connection foot 30 at a front end thereof for suitable connection, if desired, to a rear end of the business machine 12. Fastening means such as screws 31 or the like can be provided for securely connecting the control unit 10 with the business machine 12, although other types of relatively simple fastening components such as Velcro-type closure members or the like can be used to achieve this connection, as desired.

From the lower housing base 28 the control unit housing 26 includes a pair of upstanding side walls 32 and 34 conveniently interconnected at their upper ends by a top wall 36 which can include a forward tear edge 37. A rear closure wall 38 may also be provided as part of the housing 26, if desired. Importantly, however, the side walls 32 and 34 cooperate to define a generally hollow housing interior having an open front for direct exposure to the adjacent business machine 12.

A paper tape supply reel 40 is mounted within a lower region of the control unit housing 26 between the side walls 32 and 34, and a paper tape take-up reel 42 is mounted within the housing at a position directly above the supply reel 40. These supply and take-up reels 40 and 42 are rotatably supported within the housing 26 for rotational movement about generally parallel, preferably horizontal rotational axes which are oriented in parallel with the roller platen unit 22 or the like of the business machine 12. Accordingly, the supply and take-up reels 40 and 42 are positioned for smooth feeding of the paper tape 14 to the business machine with simultaneous smooth take-up winding of used paper tape from the machine.

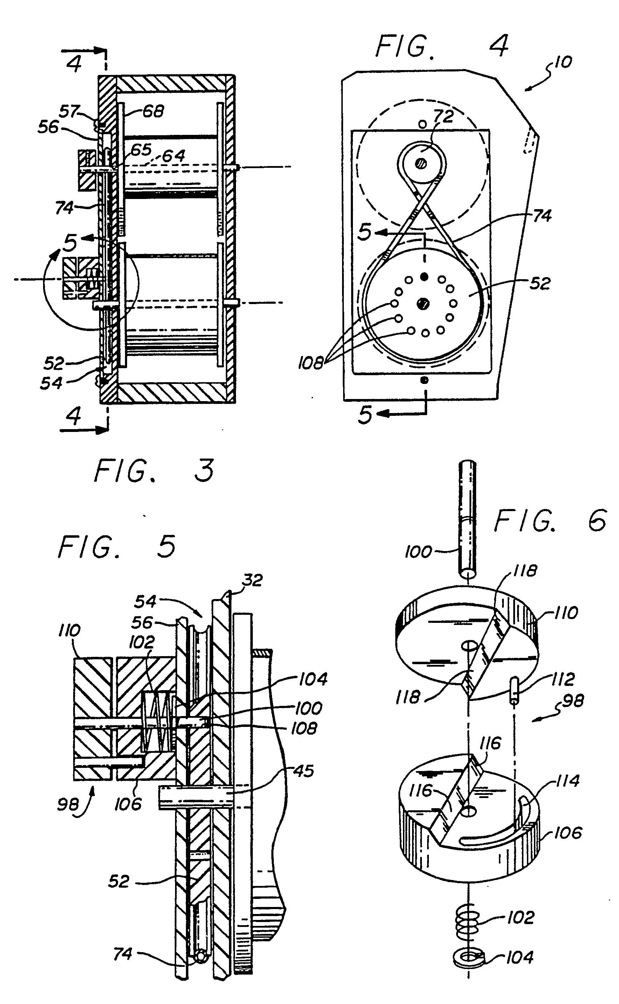

More specifically, with reference to FIGS. 2-7, the supply reel 40 comprises a relatively small diameter spindle 44 having opposite ends 44' of reduced diameter to define bearing portions rotatably seated within aligned openings 45 and 46 formed respectively in the housing side walls 32 and 34. Near one end of the supply spindle 44, a relatively larger diameter side plate 48 is formed and carries an axially projecting drive pin 50 at a position spaced radially from the rotational axis of the drive spindle. In addition, the drive spindle 44 carries a relatively large diameter drive pulley 52 for rotation therewith, wherein this drive pulley 52 is located on the outboard side of the side wall 32 adjacent the side plate 48. As shown best in FIGS. 3-5, this drive pulley 52 is normally concealed within a shallow chamber 54 formed on the outboard side of the side wall 32, wherein this chamber 54 is normally closed on the outboard side by an overlying panel door 56 removably secured to the side wall 32 by screws 57 or the like.

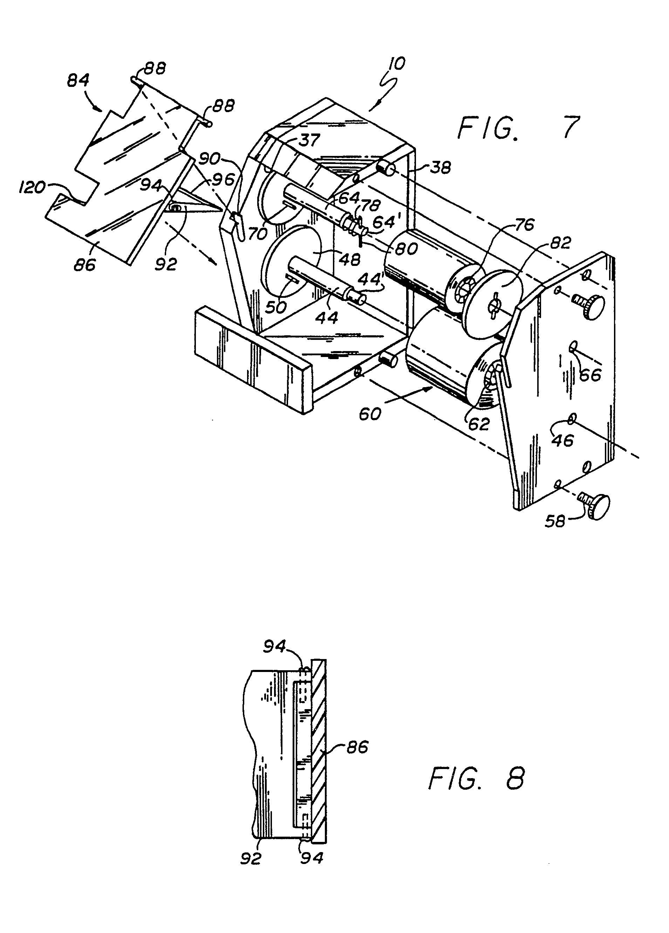

The opposite side wall 34 of the housing 26 is removably connected by screws 58 (FIGS. 1 and 7) or the like, with mating pins and apertures cooperating between the side wall 34 and the remainder of the housing to insure proper mounting alignment. When this opposite side wall 34 is removed from the remainder of the housing 26, the entire housing interior is readily accessed to permit, for example, installation of a paper tape supply roll 60 (FIG. 7) onto the supply spindle 44. As is known in the art, this paper tape supply roll 60 comprises the elongated strip of paper tape 14 wound relatively snugly onto a drive cylinder 62, wherein the drive cylinder 62 is defined by concentric cylindrical walls separated by radial webs to form axially open drive pockets, one of which receives the drive pin 50 rotatable with the supply spindle 44. Accordingly, when the side wall 44 is reinstalled onto the housing 26 the supply roll 60 rotatably drives the drive spindle 44 as the paper tape 14 from the supply roll is drawn during normal use into association with the business machine 12.

The take-up reel 42 similarly comprises a relatively small diameter take-up spindle 64 sized to span between the housing side walls 32 and 34. The opposite ends of the take-up spindle 64 are reduced in diameter to define bearing portions 64' supported rotationally within aligned openings 65 and 66 in the side walls 32 and 34. The take-up spindle 64 also includes a relatively large diameter side plate 68 near one end thereof, positioned immediately above the drive spindle side plate 48, wherein the take-up spindle side plate 68 also includes an axially positioned drive pin 70 which is radially spaced from the rotational spindle axis.

The end of the take-up spindle 64 supported by the housing side wall 32 is connected to a driven pulley 72 (FIGS. 3 and 4). This driven pulley 72 is positioned on the outboard side of the side wall 32 within the shallow chamber 54 at a position directly above the drive pulley 52 associated with the supply reel 40. Drive belt means 74 preferably in the form of an elongated spring belt or the like is wrapped about the drive and driven pulleys 52 and 72 to insure relative rotation of both pulleys together during normal operation of the business machine 12 as will be described in more detail. The direction of pulley rotation and thus the directions of supply or take-up reel rotation is controlled by appropriate wrapping of the drive belt means 74, for example, in the figure eight geometry as illustrated in Fig. 4. Importantly, the relative diameters of the drive and driven pulleys 52 and 72 insure at least slightly faster rotational movement of the take-up reel 42, with the drive belt means and the pulleys accommodating slippage in the drive connection.

With reference to FIG. 7, removal of the opposite side wall 34 also permits a take-up drive cylinder 76 to be installed onto the take-up spindle 64, wherein the take-up drive cylinder 76 is similar in construction to the supply drive cylinder 62 and is thus drivingly engaged with the adjacent drive pin 50. To achieve improved positive driving, the take-up reel further includes a small compression spring 78 retained between the larger diameter central region of the take-up spindle 64 and a lock pin 80 near the end of the spindle 64, wherein the lock pin 80 receives a circular drive disk 82 onto the take-up spindle 64 in axially abutting relation with the exposed end of the adjacent drive cylinder 76. After installation of the drive disk 82, and with both supply and take-up reels mounted on their respective spindles, the removable side wall 34 can be quickly and easily reinstalled onto the housing by use of the screws 58 or the like to rotatably support the adjacent ends of the supply and take-up reels.

In normal operation, as shown in FIGS. 1 and 2, the paper tape 14 is drawn by the operational action of the business machine 12 into association with the machine printing head 20. Concurrently with this feeding or drawing movement of the paper tape from the supply reel 40, the drive and driven pulleys 52 and 72 impart a slightly faster rotational motion to the take-up reel 42. Such rotational motion of the take-up reel 42 rewinds used paper tape 14 discharged upwardly from the business machine 12 at a sufficient rate of speed to prevent any significant tape slack between the business machine and the control unit 10. The drive and driven pulleys 52 and 72 advantageously permit sufficient slipping motion relative to the drive belt means 74, whereby the desired faster rotation or overtravel of the take-up reel 42 does not create significant risk of tape breakage. Importantly, the sizes of the drive and driven pulleys are chosen to insure slightly faster take-up of the paper tape in comparison with the supply reel notwithstanding varying diametric sizes of the paper rolls on the respective supply and take-up drive cylinders 62 and 76.

In accordance with one primary feature of the invention, the paper tape control unit 10 includes an adjustable platen unit 84 mounted at the front of the housing 26 to provide a convenient flat writing surface 85 backing up the paper tape 14 as it is discharged from the machine 12. This writing surface 85 provides a convenient structure accommodating the application of edits or notations onto the paper tape discharged from the machine.

More particularly, the illustrative platen unit 84 comprises a relatively flat writing plate 86 defining the writing surface 85 and pivotally supported at an upper margin thereof by pins 88 or the like seated into aligned and upwardly open notches 90 in the two side walls 32 and 34. A central adjustment leg 92 is pivoted by pins 94 or the like to the rear side of this flat plate 86 and projects rearwardly to define a support edge 96 for engaging a forward margin of the side walls 32 and 34. Appropriate angular adjustment of this leg 92 relative to the flat plate 86 correspondingly orients the flat plate 86 at a selected optimum angle relative to the angle of tape discharge from the machine 12, and simultaneously supports the plate 86 is a stable manner to provide the desired writing surface 85.

In accordance with further important features of the invention, a locking assembly 98 is provided for releasably locking the supply reel 40 against rotation. More particularly, as shown best in FIGS. 3, 5 and 6, this locking assembly 98 is mounted on the removable panel door 56 at the side wall 32 and includes a short lock pin 100 projecting through the panel door 56 into the adjacent shallow chamber 54. A compression spring 102 reacts between an enlarged flange 104 on the lock pin and a base disk 106 secured onto the panel door 56 for normally urging an inboard end of the lock pin 100 for reception through an aligned one of a circular series of lock ports 108 formed in the drive pulley 52. When engaged with one of the lock ports 108, the lock pin 100 prevents rotation of the drive pulley 52, and thereby correspondingly prevents feeding of the paper tape 14 to the business machine 12.

The outboard end of the lock pin 100 is anchored within a control disk 110 which includes a radially offset guide pin 112 projecting into an arcuate, axially open guide slot 114 in the base disk 106. Accordingly, within the limits of the guide slot 114, the control disk 110 can be rotated relative to the base disk 106 thereby rotating the lock pin 100 about its own rotational axis. During such rotation of the control disk 106, engagable cam faces 116 and 118 on the base and control disks ride over one another to control lock pin advancement into one of the drive pulley lock ports 108. More particularly, rotation of the control disk in one direction axially retracts the lock pin 100 from the drive pulley 52 to permit drive pulley rotation and normal control unit operation, as described above. Reverse rotation of the control disk 110 advances the lock pin into engagement with one of the drive pulley lock ports to prevent drive pulley rotation.

With the drive pulley 52 locked by the lock pin 100 to prevent supply reel rotation, used paper tape 14 wound onto the take-up reel 42 can be withdrawn manually for editing and review. For this purpose, a side slot 120 in the flat plate 86 conveniently exposes one side edge of the paper tape for easy manual grasping and withdrawal from the take-up reel 42. Such withdrawal in accommodated with minimal resistance by the slip-drive connection between the supply and take-up reels. During such tape withdrawal for review purposes, the locked supply reel is prevented from rotating to prevent creation of undesirable paper tape slack between the supply and the business machine. Once this tape withdrawal and review has been completed, the reviewed paper tape can be rewound quickly and easily onto the take-up reel by means of a manually exposed knob 122 secured to one end of the take-up spindle 64 (FIGS. 1-3). As soon as the paper tape is fully rewound onto the take-up reel, the supply reel can be released for resumed rotation by appropriate rotation of the control disk 110, thereby retracting the lock pin 100 from the drive pulley 52.

Accordingly, the improved paper tape control unit 10 of the present invention provides a relatively simple yet highly versatile mechanism for controlling and handling paper tape relative to a business machine. The paper tape is handled efficiently and in a manner which beneficially prevents creation of undesired tape slack at all times. Moreover, the invention easily accommodates insertion of handwritten edits and notes onto the tape, and further permits periodic used tape winding reversal for review purposes without creating tape slack problems.

## Claims

1. A paper tape control unit (10) for use with a business machine (12) having means for drawing and using an elongate strip of paper tape (14), said control unit (10) comprising a control unit housing (26), a supply reel (40) for carrying a roll of paper tape (14) in elongate strip form supply to the business machine (12), a take-up reel (42) for rewinding the paper tape (14) from said supply reel (40), means for supporting said supply and take-up reels for rotation within said housing (26), to supply and draw paper tape to and from the drawing means of said business machine (12), said supply (40) reel rotating as said paper tape is drawn from said supply means by said drawing means, and said take-up reel (40) being positioned for rewinding thereonto of said paper tape (14) used by said business machine (12) and drive means (74) coupled between said supply and take-up reels (40, 42) such that rotational driving of said supply reel (40) can correspondingly rotatably drive said take-up reel (42) for rewinding of said paper tape (14) thereonto ; characterised by a lock assembly (98) on said housing (26) for releasably locking said supply reel (40) against rotation, said drive means having sufficient slippage to permit manual rotation of said take-up reel (42) when said supply reel (40) is locked against rotation to permit withdrawal and review of a portion of said paper tape (14) rewound onto said take-up reel (42) and subsequent manual rewinding of said paper tape portion onto said take-up reel (42).

2. A paper tape control unit according to Claim 1 characterised in that said housing (26) includes means (30, 31) for releasable connection to the business machine (12).

3. A paper tape control unit according to Claim 1 or to Claim 2 characterised in that said supply reel (40) includes a drive pulley (52) rotatable therewith and wherein said take-up reel (42) includes a driven pulley (72) rotatable therewith, said drive means comprising a drive belt (74) coupled between said drive and driven pulleys (52, 72).

4. A paper tape control unit according to Claim 3 characterised in that said drive belt comprises a spring belt (74).

5. A paper tape control unit according to Claim 3 or to Claim 4 characterised in that said lock assembly (98) comprises a plurality of lock ports (108) formed in said drive pulley (52) in a generally circular array about the rotational axis of said drive pulley (52), a lock pin (100), on said housing (26) and movable between a locked position advanced into a selected one of said lock ports (108) and an unlocked position retracted from said drive pulley (52), and means (106) For selectively moving said lock pin (100) between said locked and unlocked positions.

6. A paper tape control unit according to any one of Claims 3 to 5 characterised in that said drive and driven pulleys (52, 72) are sized to ensure at least slightly faster rotational driving of said driven pulley (72).

7. A paper tape control unit according to any preceding claim characterised by a writing platen unit (84) carried on said housing (26) in a position for passage thereover of paper tape (14) used by the business machine (12) upon displacement of the paper tape (14) from the business machine toward said take-up reel (42) for rewinding.

8. A paper tape control unit according to Claim 7 characterised in that said writing platen unit (84) is removably mounted on said housing (26).

9. A paper tape control unit according to Claim 7 or to Claim 8 characterised in that said writing platen unit (84) is adjustable to select the angular relation of a relatively flat writing surface defined thereby with respect to the orientation of the paper tape (14) passing thereover.

10. A paper tape control unit according to Claim 7 characterised in that writing platen unit (84) comprises a relatively flat plate (86) having a slot (120) in one ride thereof to expose one ride edge of raid paper tape (14) for manual grasping.

11. A paper tape control unit according to any preceding claim characterised by knob means (122) coupled to raid take-up reel (42) and manually rotatable for manually rotating raid take-up reel (42).

**Patentansprüche**

1. Steuereinheit (10) für einen Papierstreifen (14) zur Verwendung mit einer Geschäftsmaschine, beispielsweise einer Additions-, Rechen- oder dgl. Maschine (12), die zum Fördern und Einsetzen eines langen Papierstreifens (14) geeignet ist, wobei die Steuereinheit (10) ein Gehäuse (26) aufweist, des weiteren eine Abwickelspule (40) zur Aufnahme einer Rolle eines Papierstreifens (14) in langgestreckter Streifenform zum Zuführen zu der Geschäftsmaschine (12), eine Aufwickelspule (42) zum Wiederaufwickeln des Papierstreifens (14) von der Abwickelspule (40), Lager für die Abwickelspule (40) und die Aufwickelspule (42) für die Rotation innerhalb des Gehäuses (26) zum Abwickeln und Fördern des Papierstreifens (14) zu und von den Fördereinrichtungen der Geschäftsmaschine (12), wobei die Abwickelspule (40) sich in der Weise dreht, wie das Papierband durch die Fördereinrichtungen von der Abwickelspule gezogen wird und wobei die Aufwickelspule (42) zum Wiederaufwickeln des von der Büromaschine (12) eingesetzten Papierstreifens (14) auf die Aufwickelspule (42) und wobei die Antriebsmittel (74) zwischen der Abwickelspule (40) und der Aufwickelspule (42) derart gekoppelt sind, daß der Antrieb der Abwickelspule (40) entsprechend die Aufwickelspule (40) zum Wiederaufwickeln des Papierstreifens (40) auf diese antreibt, **gekennzeichnet durch** eine Bremseinrichtung (98) an dem Gehäuse (26) zum lösbaren Bremsen der Antriebsspule (40) gegen Drehen, wobei die Antriebsspule genügend Schlupf aufweist, um eine manuelle Drehung der Antriebsspule (40) zuzulassen, wenn die Abwickelspule (40) gegen Drehung gebremst ist, um ein Abziehen und ein Nachsehen eines auf die Aufwickelspule (42) aufgewickelten Teiles des Papierstreifens und ein anschließendes manuelles Aufwickeln des Papierstreifens (14) auf die Aufwickelspule (42) zuzulassen.

2. Steuereinheit nach Anspruch 1, dadurch gekennzeichnet, daß das Gehäuse (26) Mittel (30, 31) für die lösbare Verbindung mit der Geschäftsmaschine (12) aufweist.

3. Steuereinheit nach Anspruch 1 oder 2, dadurch gekennzeichnet, daß die Abwickelspule (40) eine mit dieser drehbeweglich verbundene Antriebs-Riemenscheibe (52) aufweist und daß die Aufwickelspule (42) eine drehbeweglich mit dieser verbundene angetriebene Riemenscheibe (72) aufweist, wobei die Antriebe einen Antriebsriemen (74) aufweisen, der zwischen der Antriebs-Riemenscheibe (52) und der angetriebenen Riemenscheibe (72) angeordnet ist.

4. Steuereinheit nach Anspruch 3, dadurch gekennzeichnet, daß der Antriebsriemen einen federnden Riemen (74) enthält.

5. Steuereinheit nach Anspruch 3 oder 4, dadurch gekennzeichnet, daß die Bremseinrichtung (98) eine Vielzahl von Bremsöffnungen (108) aufweist, die in der Antriebs-Riemenscheibe (52) in kreisförmiger Anordnung um die Rotationsachse der Antriebs-Riemenscheibe (52) vorgesehen sind, daß ein Bremsstift (100) an dem Gehäuse (26) und beweglich zwischen einer Bremsposition in eine vorgewählte Bremsöffnung (108) vorgeschoben und einer ungebremsten Position zurückgezogen von der Antriebs-Riemenscheibe (52) angeordnet ist, und daß Mittel (106) zum wahlweisen Bewegen des Bremsstiftes (100) zwischen der Bremsstellung und der freien Stellung vorgesehen sind.

6. Steuereinheit nach einem der Ansprüche 3 bis 5, dadurch gekennzeichnet, daß die Antriebs-Riemenscheibe (52) und die angetriebene Riemenscheibe (72) bemessen sind, daß wenigstens der Drehantrieb der angetriebenen Riemenscheibe (72) geringfügig stärker ist.

7. Steuereinheit nach einem der vorhergehenden Ansprüche, gekennzeichnet durch eine Schreib-Drucktafel (84), die an dem Gehäuse (26) in einer Position zum Passieren des Papierstreifens (14) darüber (84) gelagert ist, der von der Geschäftsmaschine (12) nach Verschieben des Papierstreifens (14) von der Geschäftsmaschine (12) zu der Aufwickelspule (42) für das Wiederaufwinden des Papierstreifens (14) eingesetzt ist.

8. Steuereinheit nach Anspruch 7, dadurch gekennzeichnet, daß die Schreib-Drucktafel (84) abnehmbar an dem Gehäuse (26) befestigt ist.

9. Steuereinheit nach Anspruch 7 oder 8, dadurch gekennzeichnet, daß die Schreib-Drucktafel (84) lustierbar ist, um die Winkellage der relativ flachen Schreiboberfläche einzustellen, die im Hinblick auf die räumliche Lage des darüber bewegten Papierstreifens (14) definiert ist.

10. Steuereinheit nach Anspruch 7, dadurch gekennzeichnet, daß die Schreib-Drucktafel (84) eine relativ flache Platte (86) mit einem Schlitz (120) an einer Seite derselben (86) enthält, um eine Seite des Papierstreifens (14) zum manuellen Anfassen herauszustellen.

11. Steuereinheit nach einem der vorhergehenden Ansprüche, gekennzeichnet durch einen Knopf (122), der mit der Aufwickelspule (42) gekuppelt ist und für manuelles Drehen der Aufwickelspule (42) von Hand drehbar ist.

## Revendications

1. Unité (10) de commande de papier en bande destinée à être utilisée avec une machine de bureau (12) ayant des moyens de tirage et d'utilisation d'un tronçon allongé de papier en bande (14), cette unité de commande (10) comprenant un boîtier (26) d'unité de commande, une bobine d'alimentation (14) pour porter un rouleau de papier en bande (40) à fournir à la machine de bureau (12) sous forme de tronçon allongé, une bobine de réenroulement (42) pour réenrouler le papier en bande (14) venant de la bobine d'alimentation (40), des moyens pour porter ces bobines d'alimentation et de réenroulement permettant leur rotation à l'intérieur du boîtier (26) pour fournir du papier en bande aux moyens de tirage de la machine de bureau (12) et pour prendre du papier en bande venant de ces moyens de tirage, cette bobine d'alimentation (40) tournant à mesure que le papier en bande est tiré du moyen d'alimentation par les moyens de tirage et la bobine de réenroulement (40) étant disposée pour réenrouler sur elle le papier en bande (14) utilisé par la machine de bureau (12) et un moyen d'entraînement (74) accouplé entre les bobines d'alimentation et de réenroulement (40, 42), de telle sorte qu'un entraînement en rotation de la bobine d'alimentation (14) peut entraîner en rotation de manière correspondante la bobine de réenroulement (42) pour le réenroulement sur celle-ci du papier en bande (40), caractérisée par un ensemble de verrouillage (98) monté sur le boîtier (26) pour verrouiller en rotation, de manière libérable, la bobine d'alimentation (40), le moyen d'entraînement ayant un glissement suffisant pour permettre la rotation manuelle de la bobine de réenroulement (42) lorsque cette bobine d'alimentation (40) est verrouillée en rotation afin de permettre le tirage en arrière et la révision d'une partie du papier en bande (14) enroulé sur la bobine de réenroulement (42) et permettre un réenroulement manuel ultérieur sur la bobine de réenroulement (42) de cette partie du papier en bande.

2. Unité de commande de papier en bande selon la revendication 1, caractérisée en ce que le boîtier (26) comprend des moyens (30, 31) de montage détachable sur la machine de bureau (12).

3. Unité de commande de papier en bande selon la revendication 1 ou la revendication 2, caractérisée en ce que la bobine d'alimentation (40) comprend une poulie d'entraînement (52) tournant avec elle et la bobine de réenroulement (42) comprend une poulie entraînée (72) tournant avec elle, le moyen d'entraînement comprenant une courroie d'entraînement (74) passant autour des poulies d'entraînement (52) et entraînée (72).

4. Unité de commande de papier en bande selon la revendication 1, caractérisée en ce que la courroie d'entraînement comprend une courroie élastique (74).

5. Unité de commande de papier en bande selon la revendication 3 ou la revendication 4, caractérisée en ce que l'ensemble de verrouillage (98) comprend une pluralité de trous de verrouillage (108) ménagés dans la poulie d'entraînement (52) dans une disposition circulaire dans l'ensemble autour de l'axe de rotation de cette poulie d'entraînement (52), une goupille de verrouillage (100) montée dans le boîtier (26) et mobile entre une position de verrouillage avancée dans un des trous choisis parmi les trous de verrouillage (108) et une position de déverrouillage rétractée par rapport à la poulie d'entraînement (52) et un moyen (106) pour déplacer sélectivement cette goupille de verrouillage (100) entre les positions de verrouillage et de déverrouillage.

6. Unité de commande de papier en bande selon l'une quelconques des revendications 3 à 5, caractérisée en ce que les poulies d'entraînement (52) et entraînée (72) sont dimensionnées pour assurer une vitesse de rotation au moins légèrement plus grande de la poulie entraînée (72).

7. Unité de commande de papier en bande selon l'une quelconque des revendications précédentes, caractérisée par une unité (84) à plateau d'écriture portée par le boîtier (26) à un emplacement pour le passage au-dessus d'elle du papier en bande (14) utilisé par la machine de bureau (12) pendant le déplacement de ce papier en bande (14) en provenance de la machine de bureau et en direction de la bobine de réenroulement (42) pour le réenroulement.

8. Unité de commande de papier en bande selon la revendication 7, caractérisée en ce que l'unité (84) à plateau d'écriture est montée de manière détachable sur le boîtier (26).

9. Unité de commande de papier en bande selon la revendication 7 ou la revendication 8, caractérisée en ce que l'unité (84) à plateau d'écriture est ajustable pour le choix de la position angulaire d'une surface d'écriture relativement plane définie par cette unité par rapport à l'orientation du papier en bande (14) passant sur ce plateau.

10. Unité de commande de papier en bande selon la revendication 7, caractérisée en ce que l'unité (84) à plateau d'écriture comprend une plaque (86) relativement plane ayant une encoche (120) dans un de ses côtés pour exposer un bord du papier en bande (14) pour la saisie manuelle de ce dernier.

11. Unité de commande de papier en bande selon l'une quelconque des revendications précédentes, caractérisée par un bouton (122) accouplé avec la bobine de réenroulement (42) et entraînable manuellement en rotation pour permettre la rotation manuelle de cette bobine de réenroulement (42).

FIG. 1

FIG. 2

EP 0 283 131 B1

FIG. 3

FIG. 4

FIG. 5

FIG. 6

10

FIG. 7

FIG. 8